# EUROPÄISCHE PATENTSCHRIFT

(11) **EP 3 467 601 B1**
(45) Veröffentlichungstag und Bekanntmachung des Hinweises auf die Patenterteilung: **13.12.2023**
(21) Anmeldenummer: 18195267.2
(22) Anmeldetag: 18.09.2018
(51) Int. Cl.: G05B 19/4061, G05B 19/418, F16P 3/14, B25J 9/16, G05D 1/02, B25J 19/06

(54) **SICHERHEITSSYSTEM ZUR ABSICHERUNG EINES KOOPERATIVEN BETRIEBS VON MENSCHEN, ROBOTERN UND MASCHINEN**
SECURITY SYSTEM FOR PROTECTION OF COOPERATIVE WORK BETWEEN PEOPLE, ROBOTS AND MACHINES
SYSTÈME DE SÉCURITÉ PERMETTANT DE PROTÉGER LE FONCTIONNEMENT COOPÉRATIF D'HUMAINS, DE ROBOTS ET DE MACHINES

(30) Priorität: 06.10.2017 DE 102017123295
(43) Veröffentlichungstag der Anmeldung: 10.04.2019
(73) Patentinhaber: Pilz GmbH & Co. KG, 73760 Ostfildern (DE)
(72) Erfinder: Pilz, Thomas, 73760 Ostfildern (DE); Horter, Hansjürgen, 73760 Ostfildern (DE); Holzäpfel, Matthias, 73760 Ostfildern (DE)
(74) Vertreter: Witte, Weller & Partner Patentanwälte mbB

(56) Entgegenhaltungen:
- EP-A1- 1 901 150
- WO-A1-2008/131704
- WO-A1-2014/008929
- DE-A1-102010 028 292
- US-A1- 2017 144 307
- N N: "HOKUYO Safety Laser Scanner UAM-05LP-T301", , 1. August 2016 (2016-08-01), Seiten 1-8, XP055596655, Gefunden im Internet: URL:https://www.oem.fi/ui/product-resource s/oem/uam-05lp-t301-c-datasheet-_-118070.p df?att=False&hash=1C3D69E931FB6E3D29413CC2 295AFBAE [gefunden am 2019-06-14]
- N N: "Omron F3SJ-A----N-- Series (Version 2) Safety Light Curtain User's Manual", , 1 January 2014 (2014-01-01), pages 1-223, XP055596678, Retrieved from the Internet: URL:https://industrial.omron.us/es/media/F 3SJ-A-P_Manual_EN_719K_tcm922-112436.pdf [retrieved on 2019-06-14]
- Müller ET AL: "TAKTILE SENSORSYSTEME", , 1 June 2016 (2016-06-01), pages 1-2, XP055798044, Retrieved from the Internet: URL:https://www.iff.fraunhofer.de/content/ dam/iff/de/dokumente/publikationen/taktile -sensorsysteme-fraunhofer-iff.pdf [retrieved on 2021-04-22]
- Kunze Sariana: "Mobiler Roboter trägt Dichtmittel bei Flugzeugen auf", , 2 April 2014 (2014-04-02), pages 1-3, XP055798048, Retrieved from the Internet: URL:https://www.elektrotechnik.vogel.de/mo biler-roboter-traegt-dichtmittel-bei-flugz eugen-auf-a-440394/ [retrieved on 2021-04-22]
- Safety Sirius ET AL: "Applications & Tools Answers for industry. Muting with MSS 3RK3 Advanced", , 1 April 2012 (2012-04-01), pages 1-19, XP055929980, Retrieved from the Internet: URL:https://cache.industry.siemens.com/dl/ files/384/59847384/att_95264/v1/faq_598473 84_muting_with_mss_advanced_en.pdf [retrieved on 2022-06-10]

## Beschreibung

Die vorliegende Erfindung betrifft ein Sicherheitssystem zur Absicherung eines kooperativen Betriebs von Menschen, Robotern und Maschinen an einer technischen Anlage.

Grundsätzlich sind technische Anlagen wie Maschinen, Roboter oder ganze Fertigungsanlagen mit geeigneten Einrichtungen abzusichern, so dass für Menschen und Gegenstände im Umfeld der technischen Anlage während des Betriebs keine Gefahr ausgeht. Um dies zu erreichen, ist eine technische Anlage in der Regel mit sicherheitsbezogenen Einrichtungen versehen, die einen Gefahrenbereich der technischen Anlage überwachen und geeignete Maßnahmen ergreifen, wenn eine Gefahrensituation erkannt wird.

Die Anforderungen an eine technische Anlage sowie ihre Absicherung sind in Europa beispielsweise durch die Maschinenrichtlinie (2006/42/EG) vorgeschrieben. Demnach muss ein Hersteller einer Maschine eine Risikobeurteilung durchführen, um alle mit seiner Maschine verbundenen Gefahren zu ermitteln, um basierend darauf seine Maschine entsprechend zu entwerfen. Sicherheitsbezogene Einrichtungen sind in diesem Zusammenhang u.a. Sicherheitsschaltungsanordnungen, die Sensoren zur Überwachung eines Gefahrenbereichs sowie geeignete Mittel zum Überführen einer technischen Anlage in einen gefahrlosen Zustand umfassen. Im einfachsten Fall schaltet ein Schaltgerät eine technische Anlage stromlos, sobald von dem Sensor ein Gefahrenzustand erkannt wird, so dass von der Maschine keine Gefahr mehr ausgeht.

Die Anforderungen an die sicherheitsbezogenen Einrichtungen sind dabei sehr hoch und teilweise konträr zu den funktionalen Anforderungen der technischen Anlage. So muss einerseits durch die sicherheitsbezogene Einrichtung gewährleistet sein, dass bei jedem anzunehmenden Gefahrenfall die technische Anlage in einen gefahrlosen Zustand überführt wird, gleichzeitig darf der Einsatz der sicherheitsbezogenen Einrichtung jedoch nicht dazu führen, dass die Verfügbarkeit aufgrund von Fehlabschaltungen in Fällen, in denen gar keine Gefahrensituation vorliegt, verringert wird.

Ein weiterer Aspekt, den es zu beachten gilt, ist dass neben dem Menschen vermehrt andere Akteuren auftreten, die mit den technischen Anlagen zusammenarbeiten. Hierbei handelt es sich um autonom arbeitende, technische Einheiten, die für sich genommen unabhängig agieren und wie ein Mensch mit einer technischen Anlage zusammenarbeiten müssen. Beispiele für solche Einheiten sind Fahrzeuge eines fahrerlosen Transportsystems (FTS) oder autonom arbeitende Roboter, die sich ähnlich wie Menschen frei im Umfeld der technischen Anlage bewegen und mit dieser interagieren können.

Üblicherweise wird eine sichere Zusammenarbeit zwischen Menschen, technischen Anlagen und autonom arbeitenden Einheiten durch feste Installationen, wie Zäune oder Absperrungen, realisiert, oder durch fest definierte Fahrwege, welche die autonom arbeitenden Einheiten nicht verlassen dürfen. Durch die räumliche Trennung der einzelnen Akteure kann verhindert werden, dass für den Bediener einer technischen Anlage, von dieser oder den anderen Akteuren eine Gefahr ausgeht. Dieses Vorgehen führt jedoch dazu, dass die autonom arbeitenden Einheiten wesentlich in ihrem autonomen Verhalten eingeschränkt werden und regelmäßig ihr Potenzial nicht vollständig abrufen können. Ebenso schränken festinstallierte Schutzeinrichtungen die Möglichkeiten eine technische Anlage zu verändern bzw. an veränderte Bedienungen anzupassen stark ein.

Es ist daher wünschenswert, einen echten koexistenten und kooperativen Betrieb von Menschen, Maschinen und autonom arbeitenden Einheiten zu ermöglichen, wobei die Zusammenarbeit möglichst flexibel, aber gleichzeitig den Richtlinien und Normen entsprechend sicher, sein soll.

DE 10 2010 028292 A1, WO 2008/131704 A1, US 2017/144307 A1 sowie EP 1 901 150 A1 zeigen jeweils weiteren Stand der Technik.

Das Benutzerhandbuch "Omron F3SJ-A-----N-Series (Version 2) Safety Light Curtain User's Manual" beschreibt ein Sicherheitssystem, bei dem Sicherheitsmaßnahmen kurzzeitig unterbrochen ("muting") werden. Ferner wird beschrieben, dass während der Unterbrechung, Sicherheit anderweitig gewährleistet werden muss. Es wird vorgeschlagen, eine Lampe einzuschalten, während das "Muting" aktiviert ist, um Benutzern anzuzeigen, dass die Sicherheitsfunktion gegenwärtig deaktiviert ist.

Müller ET AL: "TAKTILE SENSORSYSTEME", 1. Juni 2016 (201 6-06-01), Seiten 1-(https://www.iff.fraunhoter.de/content/dam/iff/de/dokumente/publikationen/taktile-sensorsysteme-fraunhofer-iff.pdf) beschreiben eine sichere Kollisionserkennung durch eine "Roboterhaut". Demnach wird, um eine möglichst lückenlose Berührungserkennung zu gewährleisten, die Roboteroberfläche mit einem maßgeschneiderten Messaufnehmer ausgestattet.

Kunze Sariana: "Mobiler Roboter trägt Dichtmittel bei Flugzeugen auf", 2. April 2014 (2014-0402), Seiten 1-3, (https://www.elektrotechnik.vogel.de/mobiler-roboter-traegtdichtmittel-bei-flugzeugen-auf-a-440394/) offenbart eine berührungsempfindliche Roboterhaut, die im Zusammenwirken mit weiteren optischen Sensoren schwerwiegende Zusammenstöße zwischen Mensch und Roboter verhindert.

Sirius Safety "Muting with MSS3RK3 Advanced" beschreibt "Muting"-Verfahren bei Lichtgittern und verschiedene sicherheitstechnische Voraussetzungen hierfür.

Es ist eine Aufgabe der vorliegenden Erfindung, ein Sicherheitssystem anzugeben, das eine Koexistenz von Maschinen, Menschen und autonom arbeitenden Einheiten gestattet, eine flexible Zusammenarbeit ermöglicht und gleichzeitig eine ausreichende Absicherung gewährleistet, ohne dabei die Verfügbarkeit einer technischen Anlage einzuschränken.

Gemäß einem Aspekt der vorliegenden Erfindung wird diese Aufgabe gelöst durch ein Sicherheitssystem sowie ein Verfahren gemäß den unabhängigen Ansprüchen. Weitere Ausführungsformen sind in den abhängigen Ansprüchen gezeigt. Der Umfang der Erfindung wird durch die Ansprüche definiert. Jede Bezugnahme auf "Ausführungsform(en)","Beispiel(e)", "die gegenwärtige Technologie" oder "Aspekt(e) der Erfindung" in dieser Beschreibung, die nicht unter den definierten Umfang fällt, sollte als veranschaulichendes Beispiel(e) zum Verständnis der Erfindung interpretiert werden.

Es ist somit eine Idee der vorliegenden Erfindung, ein Sicherheitssystem so auszubilden, dass es eine autonom arbeitende, technische Einheit erkennt und mit dieser zusammenarbeitet, indem es die sicherheitsbezogenen Einrichtungen so einschränkt, dass das Auftreten der autonom arbeitenden Einheit im Gefahrenbereich der technischen Anlage nicht zum Abschalten der technischen Anlage führt, gleichzeitig jedoch eine Absicherung durch die sicherheitsbezogene Einrichtung weiterhin gewährleistet werden kann.

Das Identifizieren der autonom arbeitenden, technischen Einheit umfasst dabei zum einen das Erfassen der Einheit in einem definierten Bereich im Umfeld der technischen Anlage und zum anderen das Erkennen, um welche oder was für eine Einheit es sich handelt.

Registrieren bedeutet in diesem Zusammenhang, der identifizierten Einheit Privilegien in Bezug auf die sicherheitsbezogene Einrichtung einzurichten. Das Registrieren entspricht somit einer Anmeldung der autonom arbeitenden Einheit beim Sicherheitssystem, so dass dieses die sicherheitsbezogenen Einrichtungen so einrichten kann, dass eine Zusammenarbeit der autonom arbeitenden Einheit mit der technischen Anlage möglich wird. Auf diese Weise kann beispielsweise der Materialfluss zur technischen Anlage auf einfache Weise ermöglicht werden, während gleichzeitig unter bestimmten Voraussetzungen der Zugang des Menschen zur Anlage uneingeschränkt erhalten bleibt. Das heißt, das Sicherheitssystem kann weiterhin den Zugang von Personen zur technischen Anlage erlauben und eine Absicherung durch die erste sicherheitsbezogene Einrichtung gewährleisten.

Das Beschränken der Überwachung beinhaltet das Aktivieren anderer Sicherheitseinrichtungen, die eine Endabsicherung während der beschränkten Überwachung ermöglichen.

Das erfindungsgemäße Sicherheitssystem gestattet somit eine Koexistenz von Menschen und autonom arbeitenden Einheit an einer technischen Anlage, ohne dass die Verfügbarkeit eingeschränkt wird oder Abstriche in der Sicherheit gemacht werden müssen. Das Sicherheitssystem kann somit auf einfache und sichere Weise einen kooperierenden Betrieb von Menschen und autonom arbeitenden Einheiten an einer technischen Anlage ermöglichen. Gleichzeitig werden die autonom arbeitenden Einheit weder in ihrem freien Betrieb eingeschränkt noch werden feste Installationen benötigt, um die autonom arbeitenden Einheiten und die Bediener einer Anlage räumlich voneinander zu trennen. Die oben genannte Aufgabe ist damit vollständig gelöst.

In einer bevorzugten Ausgestaltung umfasst die erste sicherheitsbezogene Einrichtung eine Sensorik zur Detektion von Personen in dem ersten Gefahrenbereich und das Sicherheitssystem ist dazu ausgebildet, anhand der Sensorik die autonom arbeitende, technische Einheit zu identifizieren.

In dieser Ausgestaltung verwendet das Sicherheitssystem somit die vorhandenen Sensoren der sicherheitsbezogenen Einrichtungen der technischen Anlage, um eine autonom arbeitende Einheit zu identifizieren. Beispielsweise kann die sicherheitsbezogene Einrichtung ein dreidimensionales sicheres Kamerasystem umfassen, welches dazu ausgebildet ist, nicht nur eine Gefahrensituation zu erkennen, sondern auch Elemente als Einheit zu erfassen und zu bewerten. Vorteilhafterweise kann das Sicherheitssystem so auf bereits vorhandene Sensorik zurückgreifen, ohne dass neue Sensoren dem System hinzugefügt werden müssen. Auf diese Weise können die Kosten für ein erfindungsgemäßes Sicherheitssystem vorteilhaft reduziert werden.

In einer weiteren Ausgestaltung ist das Sicherheitssystem dazu eingerichtet, der autonom arbeitenden, technischen Einheit mit der Identifikation eine Kennung zuzuordnen.

In dieser Ausgestaltung erkennt und erfasst das Sicherheitssystem somit nicht nur die autonom arbeitende Einheit, sondern ordnet ihr auch eine Kennung, insbesondere eine eindeutige Kennung zu. Auf diese Weise kann das Sicherheitssystem die Informationen zur autonom arbeitenden Einheit auf einfache Weise weiterverarbeiten, um beispielsweise einen nachfolgenden Authentisierungsvorgang durchzuführen.

In einer weiteren Ausgestaltung weist das Sicherheitssystem eine Kommunikationsschnittstelle zur Kommunikation mit der autonom arbeitenden, technischen Einheit auf, und das Sicherheitssystem ist dazu eingerichtet, eine Kennung der autonom arbeitenden, technischen Einheit über die Kommunikationsschnittstelle entgegenzunehmen, um die autonom arbeitende, technische Einheit zu identifizieren.

In dieser Ausgestaltung umfasst das Sicherheitssystem somit eine Kommunikationsschnittstelle, mit der mindestens eine unidirektionale Kommunikation von der autonom arbeitenden, technischen Einheit zu dem Sicherheitssystem möglich ist. Über die Kommunikationsschnittstelle kann die autonom arbeitende Einheit dem Sicherheitssystem eine Kennung zur Identifizierung zukommen lassen, wodurch auf einfache Weise eine sichere und eindeutige Identifizierung der autonom arbeitenden, technischen Einheit im Umfeld der technischen Anlage möglich ist. Bevorzugt ist eine bidirektionale Kommunikation möglich, so dass neben der Identifizierung weitere Daten zwischen der autonom arbeitenden Einheit und dem Sicherheitssystem ausgetauscht werden können.

In einer hierzu bevorzugten Ausgestaltung ist die Kommunikationsschnittstelle eine Funkschnittstelle. Über die Funkschnittstelle kann eine Kommunikation zwischen der autonom arbeitenden Einheit und dem Sicherheitssystem besonders einfach und flexibel ermöglicht werden. Beispielsweise kann eine sichere Kommunikation über eine RFID-Schnittstelle einfach und kostengünstig realisiert werden. Die Ausgestaltung trägt somit zur Flexibilität des Systems bei und gleichzeitig zu einer kostengünstigen Realisierung.

In einer weiteren hierzu bevorzugten Ausgestaltung ist das Sicherheitssystem dazu eingerichtet, die definierte Bedingung anhand der Kennung zu prüfen.

In dieser Ausgestaltung erfolgt die Registrierung somit anhand der eindeutigen Kennung. Das heißt, die Kennung ist Teil eines Authentisierungsvorgangs, mit dem sich eine autonom arbeitende Einheit beim Sicherheitssystem anmeldet. Über eine eindeutige Kennung kann dieser Vorgang besonders einfach realisiert werden.

In einer weiteren Ausgestaltung ist das Sicherheitssystem dazu eingerichtet, auf ein definiertes Ereignis die Registrierung der autonom arbeitenden, technischen Einheit zu widerrufen und die Beschränkung der Überwachung aufzuheben.

In dieser Ausgestaltung ist neben der Registrierung auch das Auflösen einer Registrierung der autonom arbeitenden, technischen Einheit möglich. Das heißt, eine autonom arbeitende, technische Einheit kann sich nicht nur beim System anmelden, sondern sich auch aktiv vom System abmelden oder abgemeldet werden, woraufhin auch die Beschränkung der Überwachung aufgehoben wird. Diese Ausgestaltung trägt somit vorteilhaft zur Erhöhung der Flexibilität bei, indem eine dynamische Zusammenarbeit zwischen der autonom arbeitenden Einheit und der technischen Anlage bzw. der sicherheitsbezogenen Einrichtungen der Einrichtungen der technischen Anlage ermöglicht werden kann.

In einer hierzu bevorzugten Ausgestaltung ist das definierte Ereignis der Ablauf einer definierten Zeitspanne, eine Abmeldung der autonom arbeitenden, technischen Einheit und/oder ein Rückzug der autonom arbeitenden, technischen Einheit aus dem ersten Gefahrenbereich der technischen Anlage.

In dieser Ausgestaltung ist der Abmeldevorgang somit von verschiedenen Ereignissen auslösbar. Beispielsweise kann einer autonom arbeitenden, technischen Einheit nur temporär örtlicher Zugang gewährt werden, wobei nach Ablauf einer definierten Zeitspanne die Zugangsberechtigung automatisch erlischt. Alternativ oder ergänzend kann sich eine autonom arbeitende, technische Einheit auch von dem Sicherheitssystem aktiv abmelden, um anzuzeigen, dass es den kooperativen Betrieb abbricht. Diese Abmeldung kann unter anderem auch erfolgen, indem sich die autonom arbeitende Einheit aus dem Gefahrenbereich der technischen Anlage entfernt. Es versteht sich, dass die verschiedenen Möglichkeiten auch kombiniert werden können. Auf diese Weise kann die Flexibilität der Zusammenarbeit weiter erhöht werden.

In einer weiteren Ausgestaltung weist die autonom arbeitende, technische Einheit eine zweite sicherheitsbezogene Einrichtung auf, die dazu ausgebildet ist, einen zweiten Gefahrenbereich der autonom arbeitenden, technischen Einheit zu überwachen.

In dieser Ausgestaltung verfügt die autonom arbeitende Einheit über eine oder mehrere eigene sicherheitsbezogene Einrichtungen, um einen Gefahrenbereich um die autonom arbeitende Einheit abzusichern. Beispielsweise kann eine autonom arbeitende, technische Einheit, wie ein fahrerloses Transportfahrzeug, über eigene Sicherheitseinrichtungen wie z.B. ein Personenerkennungssystem (Auffahrschutz) oder Not-Aus-Einrichtungen zum aktiven Stillsetzen des Fahrzeugs in einer Notsituation verfügen. Mit anderen Worten kann es sich bei der autonom arbeitenden Einheit um eine in ähnlicher Weise abgesicherte technische Einheit handeln wie die technische Anlage selbst. Die zweite sicherheitsbezogene Einrichtung ist eine zweite eigenständige und außerhalb des Sicherheitssystems unabhängige Sicherheitseinrichtung. Durch eine durch das Sicherheitssystem realisierbare Kooperation zwischen der ersten und zweiten sicherheitsbezogenen Einrichtung kann die Sicherheit an der technischen Anlage weiter erhöht werden.

In einer weiteren hierzu bevorzugten Ausgestaltung umfasst die zweite sicherheitsbezogene Einrichtung mindestens ein Meldegerät zur Signalisierung einer Gefahrensituation in dem zweiten Gefahrenbereich. Die zweite sicherheitsbezogene Einrichtung umfasst somit entweder eine Sensorik zum Überwachen des Gefahrenbereichs, wie beispielsweise Radar- oder Lasersensoren oder ein sicheres Kamerasystem, oder ein Meldegerät, mit dem aktiv eine Gefahrensituation angezeigt werden kann, wie beispielsweise ein klassischer Not-Aus-Taster.

In einer weiteren bevorzugten Ausgestaltung ist das Sicherheitssystem dazu ausgebildet, während der Beschränkung der Überwachung des ersten Gefahrenbereichs der technischen Anlage durch die erste sicherheitsbezogene Einrichtung ein Signal, welches eine Gefahrensituation im ersten Gefahrenbereich repräsentiert, von der zweiten sicherheitsbezogenen Einrichtung der autonom arbeitenden, technischen Einheit entgegenzunehmen, um die technische Anlage in einen gefahrlosen Zustand zu überführen, wenn eine Gefahrensituation erkannt wird.

In dieser Ausgestaltung arbeiten die erste sicherheitsbezogene Einrichtung und die zweite sicherheitsbezogene Einrichtung zusammen, um den Gefahrenbereich um die technische Anlage abzusichern. Das heißt, das Sicherheitssystem kombiniert die sicherheitsbezogenen Einrichtungen der technischen Anlage und der autonom arbeitenden, technischen Einheit im Bereich der technischen Anlage, um eine zuverlässige Überwachung des Gefahrenbereichs zu gewährleisten. Auf diese Weise kann auch bei einer Beschränkung der Überwachung durch die erste sicherheitsbezogene Einrichtung der technischen Anlage eine zuverlässige Überwachung des gesamten Gefahrenbereichs gewährleistet werden, indem das Sicherheitssystem zur Überwachung auf die zweiten sicherheitsbezogenen Einrichtungen der autonom arbeitenden, technischen Einheit im Umfeld der technischen Anlage zurückgreift. Durch diese Ausgestaltung kann nicht nur die Flexibilität des Systems erhöht werden, sondern insbesondere auch die Absicherung von Menschen im Gefahrenbereich der technischen Anlage verbessert werden, wobei die Verfügbarkeit hoch bleibt.

In einer hierzu bevorzugten Ausgestaltung weist das Sicherheitssystem eine weitere sicherheitsbezogene Einrichtung auf, um die technische Anlage in einen gefahrlosen Zustand zu überführen.

In dieser Ausgestaltung verfügt das Sicherheitssystem somit über eine weitere sicherheitsbezogene Einrichtung, die unabhängig von der ersten und/oder der zweiten sicherheitsbezogenen Einrichtung ist, um die technische Anlage in einen gefahrlosen Zustand zu überführen, insbesondere um diese abzuschalten. Beispielsweise kann das Sicherheitssystem eigene sichere Ausgänge aufweisen, die auf Schütze in einer Stromversorgung der technischen Anlage wirken, um diese stillzusetzen. Das Sicherheitssystem ist somit ausgebildet, unabhängig die Sicherheit herbeizuführen. Die Ausgestaltung trägt somit zu einer weiteren Erhöhung der Sicherheit an der technischen Anlage bei.

In einer alternativen oder ergänzenden Ausgestaltung hierzu ist das Sicherheitssystem dazu eingerichtet, das Signal der zweiten sicherheitsbezogenen Einrichtung an die erste sicherheitsbezogene Einrichtung weiterzuleiten, um die technische Anlage in einen gefahrlosen Zustand zu überführen.

In dieser Ausgestaltung greift das Sicherheitssystem somit auf die erste sicherheitsbezogene Einrichtung zurück, um die technische Anlage in einen gefahrlosen Zustand zu überführen. Mit anderen Worten, wenn die zweite sicherheitsbezogene Einrichtung der autonom arbeitenden Einheit eine Gefahrensituation erkennt und diese an das Sicherheitssystem meldet, verwendet dieses die (beschränkte) erste sicherheitsbezogene Einrichtung, um eine entsprechende Sicherheitsfunktion, wie das Abschalten der technischen Anlage, auszuführen. Beispielsweise greift das Sicherheitssystem auf die Sicherheitsschaltgeräte der ersten sicherheitsbezogenen Einrichtung zurück, um die technische Anlage abschalten zu können. Die Ausgestaltung trägt vorteilhaft dazu bei, das erfindungsgemäße Sicherheitssystem kostengünstig zu realisieren, indem bereits vorhandene Komponenten wiederverwendet werden können.

In einer weiteren Ausgestaltung weist die erste sicherheitsbezogene Einrichtung zumindest eine nicht-einschränkbare Einrichtung auf, die eingerichtet ist, auch nach der Registrierung der autonom arbeitenden, technischen Einheit in dem ersten Gefahrenbereich zu überwachen.

In dieser Ausgestaltung bleibt somit selbst bei einer Beschränkung der ersten sicherheitsbezogenen Einrichtung mindestens eine Einrichtung übrig, die eine Endabsicherung gewährleisten kann. Das heißt, die erste sicherheitsbezogene Einrichtung verfügt mindestens über zwei Einrichtungen zur Überwachung des Gefahrenbereichs, wobei mindestens eine Einrichtung während der Beschränkung aktiv bleibt. Auf diese Weise kann stets eine Mindestabsicherung gewährleistet werden, wodurch die Sicherheit an der technischen Anlage erhöht werden kann.

In einer hierzu bevorzugten Ausgestaltung ist die nicht-einschränkbare Einrichtung eine Berührungserfassung und/oder eine Nahfeldabsicherung.

In dieser Ausgestaltung ist die Endabsicherung somit als Berührungserfassung über taktile Sensoren oder als Nahfeldabsicherung über Sensoren mit näherungssensorischen Eigenschaften ausgeführt. Beide Formen lassen sich bevorzugt durch eine textile Roboterhaut realisieren, die sich über die Oberfläche der abzusichernden Komponenten der technischen Anlage erstreckt. Die Absicherung durch die vorgenannten Verfahren ist besonders geeignet als Endabsicherung, da diese in der Regel den größtmöglichen Bewegungsfreiraum vor der technischen Anlage ermöglichen ohne die technische Anlage selbst in ihrer Bewegung einzuschränken. Die Ausgestaltung trägt somit vorteilhaft zur Erhöhung der Sicherheit und der Flexibilität im kooperativen Betrieb von Mensch und Maschine bei.

In einer weiteren hierzu bevorzugten Ausgestaltung ist die nicht-einschränkbare Einrichtung in einem inaktiven Zustand, wenn die erste sicherheitsbezogene Einrichtung in einem unbeschränkten Zustand ist.

In dieser Ausgestaltung ist die nicht-einschränkbare Einrichtung somit nur aktiv, wenn die erste sicherheitsbezogene Einrichtung durch das Sicherheitssystem beschränkt ist und im Übrigen bevorzugt ausgeschaltet. Dies hat den Vorteil, dass die Endabsicherung nur dann aktiv ist, wenn sie tatsächlich benötigt wird, also in einem Zustand, in dem die übliche Überwachung durch die sicherheitsbezogene Einrichtung ausgesetzt ist. Dies ist einerseits energiesparend und andererseits kann durch diese Ausgestaltung die Verfügbarkeit erhöht werden, da die in der Regel empfindlicheren Endabsicherungen zu keiner fehlerhaften Abschaltung führen können, wenn der Gefahrenbereich bereits durch andere Systeme überwacht wird.

In einer weiteren Ausgestaltung ist die erste sicherheitsbezogene Einrichtung dazu eingerichtet, den ersten Gefahrenbereich in einen ersten Bereich und einen zweiten Bereich aufzuteilen, und das Sicherheitssystem ist ferner dazu eingerichtet, die Überwachung des ersten Gefahrenbereichs in dem ersten Bereich oder in dem zweiten Bereich zu beschränken.

In dieser Ausgestaltung ist der erste Gefahrenbereich somit in Unterbereiche aufteilbar, die von dem Sicherheitssystem unabhängig verwaltet werden können. Das heißt, die erste sicherheitsbezogene Einrichtung verfügt über eine Sensorik, die eine Aufteilung des Gefahrenbereichs zulässt, beispielsweise durch konfigurierbare Sicherheitsbereiche einer dreidimensionalen sicheren Kameraeinheit oder durch die Verwendung einer Vielzahl von einzelnen Sensoren, die verschiedene Räumer erfassen. Das Sicherheitssystem kann dann das Erkennen einer Gefahrensituation auf bestimmte Bereiche beschränken. Diese Ausgestaltung trägt vorteilhaft zu einer weiteren Erhöhung der Flexibilität bei und gleichzeitig zu einer erhöhten Sicherheit.

In einer hierzu bevorzugten Ausgestaltung ist das Sicherheitssystem dazu eingerichtet, eine Position der autonom arbeitenden, technischen Einheit zu erfassen und die Überwachung des ersten Gefahrenbereichs in dem ersten Bereich oder in dem zweiten Bereich in Abhängigkeit der Position der autonom arbeitenden, technischen Einheit zu beschränken.

In dieser Ausgestaltung wird die Überwachung somit dynamisiert. Das heißt, in Abhängigkeit einer Position der autonom arbeitenden Einheit erfolgt eine Beschränkung der Überwachung nur für den Bereich, in dem sich die autonom arbeitende, technische Einheit tatsächlich befindet. Durch die Dynamisierung wird einerseits die Flexibilität und gleichzeitig die Sicherheit erhöht.

In einer weiteren Ausgestaltung ist die autonom arbeitende, technische Einheit ein Fahrzeug eines fahrerlosen Transportsystems.

Ein fahrerloses Transportsystem ist ein innerbetriebliches, flurgebundenes Fördersystem mit automatisch gesteuerten Fahrzeugen, deren primäre Aufgabe der Materialtransport ist. Insbesondere ist das Transportsystem unabhängig von einer Steuerung einer technischen Anlage, die von dem Transportsystem bedient wird. Die Steuerung der technischen Anlage und die Steuerung des Transportsystems koexistieren somit, wobei das Sicherheitssystem eine Kooperation der beiden Systeme ermöglicht.

In einer weiteren Ausgestaltung ist, die autonom arbeitende, technische Einheit (34) ein Mensch, der sich über technische Mittel, als autonom arbeitende, technische Einheit identifizieren kann.

In dieser Ausgestaltung kann ein im Umfeld der technischen Anlage arbeitender Mensch sich als autonom, arbeitende technische Einheit ausgeben, beispielsweise durch eine RFID-Karte, und so ebenfalls eine automatische Einschränkung der Überwachung herbeiführen. Auf diese Weise kann auch eine Kooperation zwischen Maschinen und Menschen auf einfache, jedoch gleichzeitig sichere Weise ermöglicht werden. Es versteht sich, dass in solchen Fällen regelmäßig zumindest eine Endabsicherung aktiv bleiben muss. Ggf. muss auch die technische Anlage gleichzeitig in einen Wartungsmodus überführt werden, bspw., indem die Arbeitsgeschwindigkeit gedrosselt wird. Die Ausgestaltung trägt vorteilhaft dazu bei, die Flexibilität und die Verfügbarkeit zu erhöhen.

In einer weiteren Ausgestaltung umfasst die erste sicherheitsbezogene Einrichtung mindestens einen Sensor, ein Schaltgerät und einen Aktor, die eine mehrkanalige, insbesondere eine diversitäre Struktur bilden.

In dieser Ausgestaltung ist die erste sicherheitsbezogene Einrichtung somit eine Sicherheitsschaltungsanordnung, die über einen Sensor eine Gefahrensituation erfasst und über ein Schaltgerät einen Aktor ansteuert, um auf die technische Anlage zu wirken, insbesondere diese stillzusetzen. Die Sicherheitsschaltungsanordnung weist dabei eine mehrkanalige Struktur auf, d.h. mindestens zwei Kanäle, die als redundantes Paar den Ausfall der sicherheitsbezogenen Einrichtungen verhindern sollen. Darüber hinaus ist in einer bevorzugten Ausgestaltung die Struktur diversitär, d.h. es werden in den Kanälen zueinander verschiedene Teile eingesetzt, die dieselbe Funktion ausführen, aber beispielsweise von verschiedene Herstellern produziert worden sind, um so Fehler gemeinsamer Ursache ausschließen zu können. Durch diese Maßnahme kann die Sicherheit weiter erhöht werden.

In einer weiteren Ausgestaltung ist das Sicherheitssystem als logische Funktion innerhalb einer sicheren Steuerung oder als verteilte Funktion der ersten sicherheitsbezogenen Einrichtung eingerichtet.

In dieser Ausgestaltung kann das Sicherheitssystem somit unterschiedliche Formen annehmen. Insbesondere kann das Sicherheitssystem als dediziertes Gerät, beispielsweise als eigenständige Steuerung oder Computer ausgebildet sein, oder aber als eine Funktion auf einem bestehenden Steuersystem, insbesondere in Form einer Softwarelösung, implementiert sein. Darüber hinaus ist es auch denkbar, dass das Sicherheitssystem ein funktionaler Teil der sicherheitsbezogenen Einrichtung ist, wobei die sicheren Sensoren die Aufgaben des Sicherheitssystems übernehmen. Diese Ausgestaltung trägt somit zu einer günstigen und anwendungsorientierten Implementierung des Sicherheitssystems bei.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1:: eine schematische Darstellung eines Ausführungsbeispiels des neuen Sicherheitssystems,
- Fig. 2:: ein Anwendungsszenario eines Ausführungsbeispiels des neuen Sicherheitssystems,
- Fig. 3:: ein weiteres Anwendungsszenario eines Ausführungsbeispiels des neuen Sicherheitssystems,
- Fig. 4:: eine schematische Darstellung eines bevorzugten Ausführungsbeispiels des neuen Sicherheitssystems, und
- Fig. 5:: ein Flussdiagramm eines Ausführungsbeispiels des neuen Verfahrens.

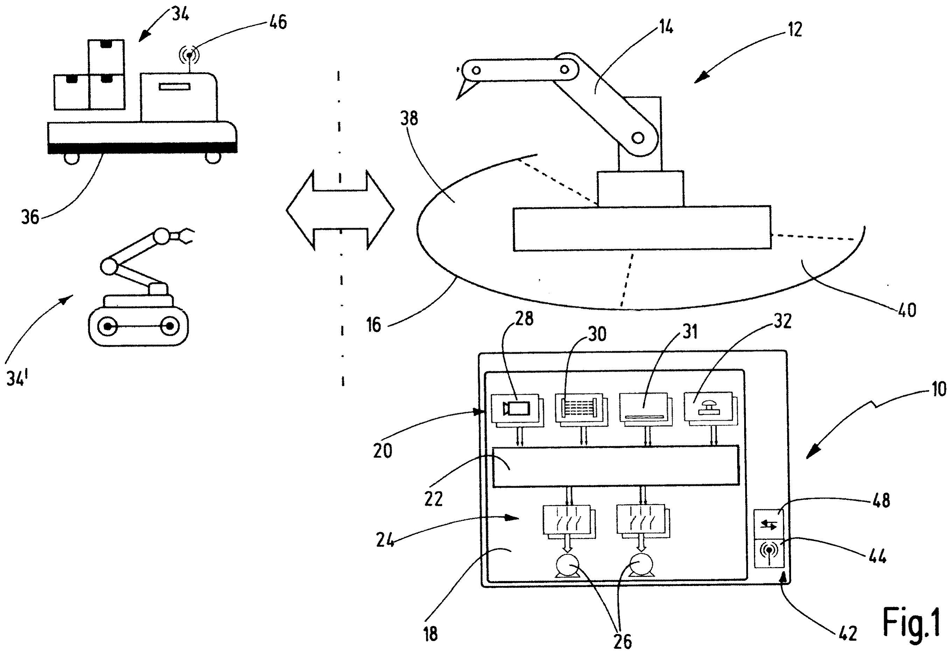

In der Fig. 1 ist das neue Sicherheitssystem in seiner Gesamtheit mit der Bezugsziffer 10 bezeichnet. Das Sicherheitssystem 10 dient der Absicherung eines kooperativen Betriebs von Menschen, Robotern und Maschinen an einer technischen Anlage 12. Die technische Anlage 12 ist hier dargestellt durch einen Roboter 14, dessen Bewegungsbereich einen ersten Gefahrenbereich 16 der technischen Anlage 12 definiert.

Das Sicherheitssystem 10 verfügt über eine erste sicherheitsbezogene Einrichtung 18, um den ersten Gefahrenbereich 16 der technischen Anlage 12 abzusichern. Die erste sicherheitsbezogene Einrichtung 18 kann eine Vielzahl von sicheren Sensoren 20, eine Steuereinheit 22 sowie sichere Ausgänge 24 umfassen. Die sicheren Sensoren 20 überwachen den ersten Gefahrenbereich 16 und erzeugen entsprechende Signale, die von der Steuerung 22 ausgewertet werden, um die Ausgänge 24 anzusteuern, um beispielsweise in einer Gefahrensituation die Antriebe 26 der technischen Anlage 12 stillzulegen.

Die Sensoren 20 bilden eine geeignete Sensorik, um Menschen und mobile Einheiten im Umfeld der technischen Anlage 12 zu detektieren. Unter anderem können als Sensoren 20 zum Einsatz kommen: 3-dimensionale sichere Kamerasysteme 28, wie beispielsweise das von der Anmelderin vertriebene SafetyEye, Nahbereichssensoren, beispielsweise auf optischen Prinzipien oder Radartechnologie, Trittmatten 31, Laserscanner, Infrarotüberwachung, Lichtschranken 30, Funkortung sowie andere Schutzeinrichtungen ohne mechanische Trennung, wie beispielsweise berührungslos wirkende Schutzeinrichtungen, BWS. Ergänzend zu den Sensoren 20 kann die erste sicherheitsbezogene Einrichtung 18 auch aktive Meldegeräte, wie beispielsweise Not-Aus-Schalter 32, die bei einer Gefahrensituation von einem Menschen ausgelöst werden, umfassen.

Im hier dargestellten Ausführungsbeispiel führt das Auslösen der Sensoren 20 bzw. das Betätigen des Not-Aus-Schalters 32 dazu, dass die Antriebe 26 von einer Stromversorgung getrennt werden und der Roboter 14 stillgesetzt wird, so dass keine Gefahr mehr für einen Menschen im Gefahrenbereich 16 von dem Roboter 14 ausgeht. Es versteht sich, dass in anderen Ausführungsbeispielen die sicherheitsbezogene Einrichtung 18 einen gefahrlosen Zustand auch anderweitig herbeiführen kann. Beispielsweise ist anstelle einer Abschaltung auch eine geeignete Ansteuerung des Roboters 14 denkbar. So kann in einem anderen Ausführungsbeispiel der Arm des Roboters 14 auch in eine Parkposition gebracht werden, um einen gefahrlosen Zustand herbeizuführen.

Ebenso ist die erste sicherheitsbezogene Einrichtung 18 nicht auf die hier dargestellte Ausführung beschränkt. Denkbar ist auch eine komplexere Sicherheitssteuerung mit mehreren Steuereinheiten, an denen Sensoren angeschlossen sind und die über ein Kommunikationsnetz miteinander kommunizieren, um eine Absicherung der technischen Anlage 12 zu gewährleisten. Umgekehrt ist es aber auch denkbar, dass die sicherheitsbezogene Einrichtung 18 lediglich aus einer oder mehreren Sicherheitsschaltungsanordnungen zusammengesetzt ist, die je einen Sensor 20 mit einem Schaltgerät (hier nicht dargestellt) koppeln, um mit Hilfe eines einfachen Schaltvorgangs einen sicheren Zustand herbeizuführen.

Das Sicherheitssystem 10 verfügt darüber hinaus über Mittel, um im Umfeld der technischen Anlage 12 eine autonom arbeitende, technische Einheit 34 zu identifizieren. Eine autonom arbeitende, technische Einheit kann insbesondere, wie hier dargestellt, ein Fahrzeug 36 eines fahrerlosen Transportsystems, FTS, sein. Ein solches Transportfahrzeug 36 (im Englischen auch als Automated Guided Vehicle, AGV, bezeichnet) ist ein flurgebundenes Fördermittel mit eigenem Fahrantrieb, das automatisch gesteuert und berührungslos geführt wird. Insbesondere dient ein solches Transportfahrzeug 36 dem Materialtransport und ist beispielsweise ausgelegt zum Ziehen oder Tragen von Fördergut mit aktiven oder passiven Lastaufnahmemitteln.

Es versteht sich, dass ein fahrerloses Transportfahrzeug 36, wie hier dargestellt, nur ein Beispiel einer autonom arbeitenden, technischen Einheit ist. Grundsätzlich umfassen autonom arbeitende, technische Einheiten sämtliche technische Maschinen, die über eine autonome Steuerung verfügen und in einem Arbeitsraum selbstständig tätig sein können. Insbesondere kann eine autonom arbeitende, technische Einheit auch ein Roboter 34' sein, der bestimmte Arbeiten in einem definierten Bereich eigenständig durchführt und sich, oder Komponenten von sich, im Raum frei bewegen kann.

Das Sicherheitssystem 10 ist dazu eingerichtet, die autonom arbeitende, technische Einheit 34 zu identifizieren. Das heißt, das Sicherheitssystem 10 kann die Einheit 34 in einem definierten Bereich erfassen und erkennen. Hierzu bedient sich das Sicherheitssystem 10 vorzugsweise der vorhandenen Sensoren 20 der ersten sicherheitsbezogenen Einrichtung 18. Beispielsweise kann das Sicherheitssystem 10 auf eine sichere Kamera 28 zurückgreifen, welche es ermöglicht, neben der reinen Erfassung der autonom arbeitenden, technischen Einheit 34 diese auch als solche zu erkennen.

Erkennen heißt hier insbesondere, dass das Sicherheitssystem 10 die autonom arbeitende, technische Einheit von einem Menschen oder einem anderen Gegenstand unterscheiden kann. Denkbar ist beispielsweise, dass die sichere Kamera 28 anhand der Konturen der autonom arbeitenden, technischen Einheit 34 diese als solche erkennt. Alternativ oder ergänzend können aber auch weitere Sensoren bei der Identifizierung mitwirken, beispielsweise Trittmatten 31, die neben dem Vorhandensein einer Belastung auch dessen Gewicht ermitteln können. Insbesondere können in bevorzugten Ausführungsbeispielen mehrere Sensoren zur Identifizierung herangezogen werden, um eine eindeutige Identifizierung der autonom arbeitenden, technischen Einheit 34 zu ermöglichen.

Nachdem eine autonom arbeitende, technische Einheit 34 im Umfeld der technischen Anlage 12 identifiziert wurde, kann das Sicherheitssystem 10 die Einheit 34 registrieren. Registrieren kann u.a. einen Authentisierungsvorgang beinhalten, bei dem überprüft wird, ob der autonom arbeitenden, technischen Einheit 34 der Zutritt zur technischen Anlage 12 erlaubt ist. Beispielsweise kann die Identifizierung für die autonom arbeitende, technische Einheit 34 eine Kennung ermitteln und das Sicherheitssystem prüft anhand der Kennung und einer in einem Speicher hinterlegten Liste, ob die autonom arbeitende, technische Einheit Zugang zur technischen Anlage 12 haben darf. Es versteht sich, dass neben dieser einfachen Authentisierung auch komplexere Anmeldevorgänge denkbar sind, die bspw. auf kryptologischen Verfahren beruhen und den Austausch von Zertifikaten beinhalten.

Unabhängig von dem verwendeten Registrierungsverfahren erfolgt erfindungsgemäß nach einer erfolgreichen Registrierung eine Beschränkung der Überwachung des Gefahrenbereichs 10 durch die erste sicherheitsbezogene Einrichtung 18 ganz oder teilweise, so dass sich die autonom arbeitende Einheit 34 der technischen Anlage nähern kann, ohne die Sicherheitsfunktion, also das Überführen der technischen Anlage 12 in einen gefahrlosen Zustand, auszulösen. In einem bevorzugten Ausführungsbeispielen werden dabei lediglich die Komponenten der ersten sicherheitsbezogenen Einrichtung 18 abgeschaltet oder deaktiviert, die durch die autonom arbeitende Einheit 34 ausgelöst werden würden. Es versteht sich, dass neben dem Deaktivieren einzelner Komponenten auch andere steuerungstechnische Maßnahmen denkbar sind. Insbesondere kann eine Beschränkung der Überwachung auch darin bestehen, eine Hauptüberwachung zu deaktivieren und geeignete Endabsicherungen zu aktivieren.

Darüber hinaus ist es denkbar, dass das Sicherheitssystem 10 anhand weiterer Parameter, die dem Sicherheitssystem 10 entweder vorab bekannt sind oder diesem von der autonom arbeitenden Einheit 34 mitgeteilt werden, die Beschränkung der ersten sicherheitsbezogenen Einrichtung 18 vornimmt. Beispielsweise kann der erste Gefahrenbereich 16 in Unterbereiche 38, 40 unterteilt sein, die unabhängig von einzelnen Sensoren 20 überwacht werden, wobei das Sicherheitssystem 10 die Überwachung durch die erste sicherheitsbezogene Einrichtung 18 nur in ausgewählten Bereichen 38, 40 beschränkt.

In dem Sicherheitssystem 10 können auch definierte Fahrwege hinterlegt sein, die über eine definierte Kennung mit den autonom arbeitenden Einheiten 34 verknüpft sind. Auf diese Weise kann das Sicherheitssystem 10 die Überwachung ortsabhängig beschränken. Alternativ kann in einem anderen Ausführungsbeispiel auch einer der sicheren Sensoren 20, beispielsweise eine sichere Kamera 28 oder eine ortsauflösende Trittmatte 31, entsprechende Ortsangaben der autonom arbeitenden Einheit 34 bereitstellen.

In einem bevorzugten Ausführungsbeispiel verfügt das Sicherheitssystem 10 über eine Kommunikationsschnittstelle 42, insbesondere eine Funkschnittstelle 44, um mit der autonom arbeitenden, technischen Einheit 34, die eine entsprechende Gegenstelle 46 aufweist, zu kommunizieren.

Über eine direkte Kommunikation mit der autonom arbeitenden, technischen Einheit 34 kann das Sicherheitssystem 10 einerseits eine Kennung abfragen, andererseits kann die autonom arbeitende, technische Einheit über die Schnittstelle seine aktuelle Position mitteilen. Neben einer direkten Kommunikation mit der autonom arbeitenden, technischen Einheit ist auch eine indirekte Kommunikation beispielsweise über eine Verknüpfung 48 mit einem Leitcomputer der autonom arbeitenden, technischen Einheit 34 möglich, um über diese Kennung und Position einer Einheit 34 zu ermitteln. Auf diese Weise kann auch ohne direkte Kommunikation mit der Einheit 34, eine entsprechende Information übermittelt werden.

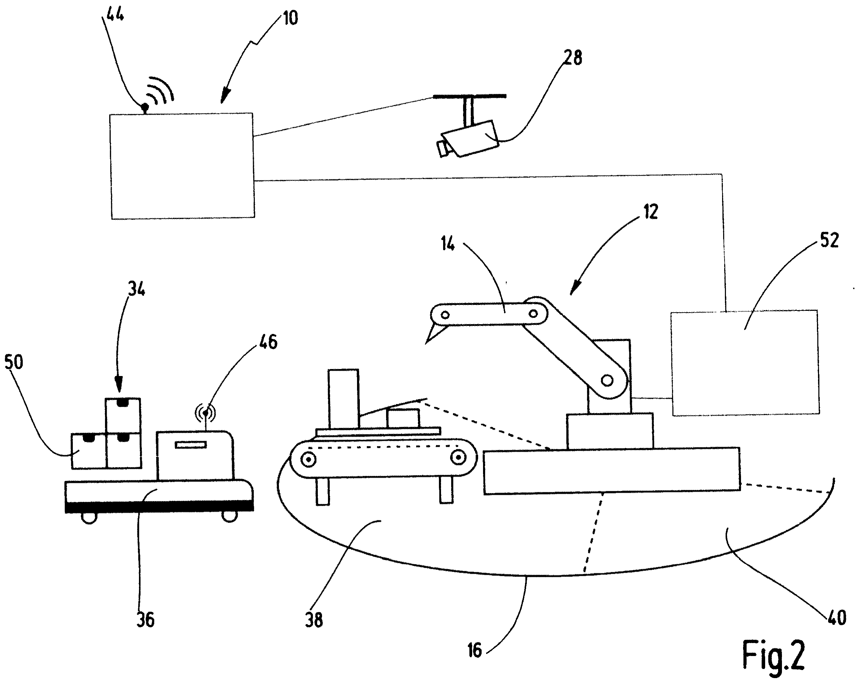

Ein konkretes Beispiel eines Anwendungsszenarios, in dem das neue Sicherheitssystem Anwendung findet, ist im Folgenden mit Bezug auf die Fig. 2 näher erläutert.

Fig. 2 zeigt an einem konkreten Beispiel, wie ein kooperativer Betrieb zwischen einer technischen Anlage 12 und einer autonom arbeitenden, technischen Einheit 34 vonstattengehen kann. Gleiche Bezugszeichen bezeichnen dabei gleiche Teile wie zuvor.

Die autonom arbeitende, technische Einheit 34 ist in diesem Ausführungsbeispiel ein fahrerloses Transportfahrzeug 36, welches Fördergut 50 zu einer technischen Anlage 12 transportiert. Das Transportfahrzeug 36 kann sich im Wesentlichen frei und unabhängig im Umfeld der technischen Anlage 12 bewegen. Es ist dazu ausgebildet, Fördergut 50 so an die technische Anlage 12 heranzuführen, dass ein Roboter 14 der technischen Anlage 12 das Fördergut 50 zur weiteren Verarbeitung vom Transportfahrzeug 36 nehmen bzw. fertige Produkte darauf ablegen kann. Hierzu ist es notwendig, dass das Transportfahrzeug 36 möglichst nah an die technische Anlage 12, insbesondere bis in den Bewegungsbereich des Roboterarms 14 hineinfahren kann. Das Transportfahrzeug begibt sich somit zwangsläufig in einen definierten Gefahrenbereich 16 der technischen Anlage 12.

Der Gefahrenbereich (hier nicht explizit gekennzeichnet) wird in diesem Ausführungsbeispiel durch ein dreidimensionales Kamerasystem 28 überwacht. Das dreidimensionale Kamerasystem 28 ist dazu ausgebildet, innerhalb des Gefahrenbereichs 16 definierte Schutzräume 38, 40 festzulegen und bei unberechtigtem Zutritt in diese Schutzräume den Roboter 14 stillzusetzen. Hierzu ist das dreidimensionale Kamerasystem 28 über ein Sicherheitssystem 10 mit einer Robotersteuerung 52 verknüpft. Über die Verknüpfung ist es möglich, dass das Sicherheitssystem 10 den Roboter 14 in einen gefahrlosen Zustand überführt. Alternativ könnte das Sicherheitssystem 10 auch unmittelbar mit der Stromversorgung des Roboters 14 verknüpft sein, um den Roboter 14 in einer Gefahrensituation stromlos zu schalten.

Über eine Funkschnittstelle 44 ist das Sicherheitssystem 10 mit einer entsprechenden Gegenstelle 46 des Transportfahrzeugs 36 gekoppelt. In dem hier bevorzugt dargestellten Ausführungsbeispiel identifiziert sich das Transportfahrzeug 36 über die Funkschnittstelle 44 bei dem Sicherheitssystem 10. Insbesondere übermittelt das Transportfahrzeug eine Kennung an das Sicherheitssystem, anhand welcher das Transportfahrzeug 36 vorzugsweise eindeutig identifiziert werden kann. Die Übermittlung der Kennung kann auf sichere, ggf. verschlüsselte Weise erfolgen. Entsprechende Verfahren hierzu sind aus dem Stand der Technik bekannt.

Nachdem sich das Transportfahrzeug 36 identifiziert hat, kann das Sicherheitssystem 10 die Überwachung durch die sichere dreidimensionale Kameraeinheit 28 einschränken. Beispielsweise kann das Sicherheitssystem 10 die Überwachung einiger der definierten Schutzräume 38, 40 des dreidimensionalen Kamerasystems 28 deaktivieren, so dass das Transportfahrzeug 36 in den Gefahrenbereich 16 der technischen Anlage 12 einfahren kann, ohne die entsprechende Sicherheitsfunktion auszulösen.

Die Beschränkung der Überwachung ist vorzugsweise nur temporär. Mit anderen Worten, die Beschränkung findet nur so lange statt, wie das Transportfahrzeug 36 sich im Gefahrenbereich der technischen Anlage 12 aufhalten muss. Denkbar ist, dass die Beschränkung grundsätzlich nur für eine definierte Zeitspanne ausgesetzt wird, innerhalb derer das Transportfahrzeug 36 seine Aufgabe an der technischen Anlage 12 erledigt haben muss. Nachdem die definierte Zeitspanne abgelaufen ist, hebt das Sicherheitssystem 10 die Beschränkung der Überwachung durch das dreidimensionale Kamerasystem 28 auf und das Transportfahrzeug 36 gilt ab diesem Zeitpunkt als nicht mehr beim Sicherheitssystem 10 angemeldet. Mit anderen Worten eine Registrierung des Transportfahrzeugs 36 wurde widerrufen. Sollte sich das Transportfahrzeug 36 zu diesem Zeitpunkt weiterhin im Überwachungsbereich des dreidimensionalen Kamerasystems 28 aufhalten, käme es zum Auslösen der Sicherheitsfunktion und die technische Anlage 12 wäre in einen gefahrlosen Zustand zu überführen.

Neben einer definierten Zeitspanne zum Aufheben der Beschränkung ist es darüber hinaus denkbar, dass sich das Transportfahrzeug 36 aktiv bei dem Sicherheitssystem 10 abmeldet, woraufhin dieses die Registrierung zurückzieht. Ebenso ist es denkbar, dass das dreidimensionale Kamerasystem 28 erkennt, dass sich das Transportfahrzeug 36 aus dem Gefahrenbereich zurückgezogen hat, woraufhin das Sicherheitssystem 10 ebenfalls die Registrierung des Transportfahrzeuges 36 zurücknimmt und die Beschränkung der Überwachung aufhebt. Auf diese Weise wird eine dynamische Überwachung des Gefahrenbereichs 16 um die technische Anlage 12 möglich, indem sich Fahrzeuge an- und abmelden und der Schutzbereich entsprechend dynamisch angepasst wird.

Die technische Anlage 12 verfügt zudem über weitere Sensoren, die eine Endabsicherung der technischen Anlage 12 ermöglichen. Bei diesen Sensoren handelt es sich um Sensoren, die eine Berührungserfassung oder eine Nahfeldabsicherung ermöglichen, nämlich taktile Sensoren, die unmittelbar auf der Oberfläche der technischen Anlage 12 angeordnet sind, um eine direkte Berührung bzw. eine unmittelbar bevorstehende Berührung (kapazitive Nahfeldsensoren) zu detektieren. Mit Hilfe dieser Sensoren, die während der Beschränkung der übrigen sicheren Sensoren nicht deaktiviert werden bzw. erst während der Beschränkung aktiviert werden, wird eine Endabsicherung ermöglicht, so dass auch dann noch eine Person effektiv im Gefahrenbereich 16 der technischen Anlage 12 geschützt wird, wenn die Überwachungen im übrigen eingeschränkt ist. In einem bevorzugten Ausführungsbeispiel sind die Sensoren zur Endabsicherung textile Sensoren, die unmittelbar auf der Oberfläche der technischen Anlage angeordnet sind, und auch als sog. Roboterhäute bezeichnet werden.

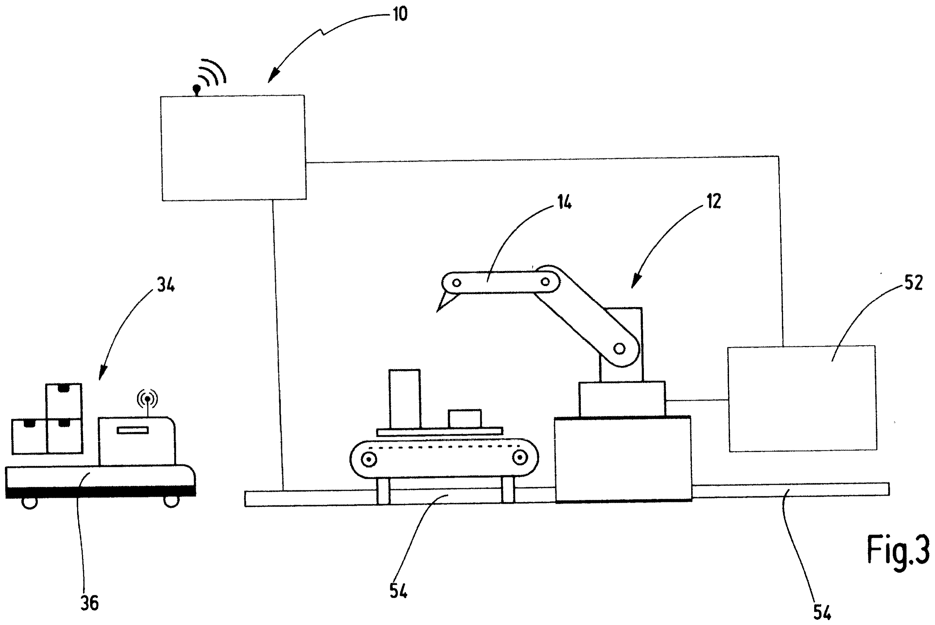

Fig. 3 zeigt ein weiteres Anwendungsszenario des neuen Sicherheitssystems. Gleiche Bezugszeichen bezeichnen auch hier wieder gleiche Teile und werden im Nachfolgenden nicht erneut erläutert.

Das Ausführungsbeispiel gemäß Fig. 3 unterscheidet sich vom Ausführungsbeispiel gemäß Fig. 2 darin, dass anstelle eines sicheren Kamerasystems Sicherheitstrittmatten 54 um den Roboter 14 platziert sind. Wie zuvor das sichere Kamerasystem, kann über die Trittmatten, insbesondere über Trittmatten mit Ortsauflösung, das Transportfahrzeug 36 identifiziert und dessen Position bestimmt werden. Basierend auf diesen Informationen kann das Sicherheitssystem 10 wie zuvor die Überwachung eines Gefahrenbereichs um die technische Anlage 12 steuern.

Das Identifizieren der autonom arbeitenden, technischen Einheit kann insbesondere über eine Gewichtsbestimmung erfolgen oder anhand eines eindeutigen "Fußabdrucks" der Einheit 34. Besonders bevorzugt werden die Trittmattensensoren mit der zuvor beschriebenen sicheren Kameraeinheit kombiniert, um eine möglichst präzise und fehlerfrei Auswertung zu ermöglichen.

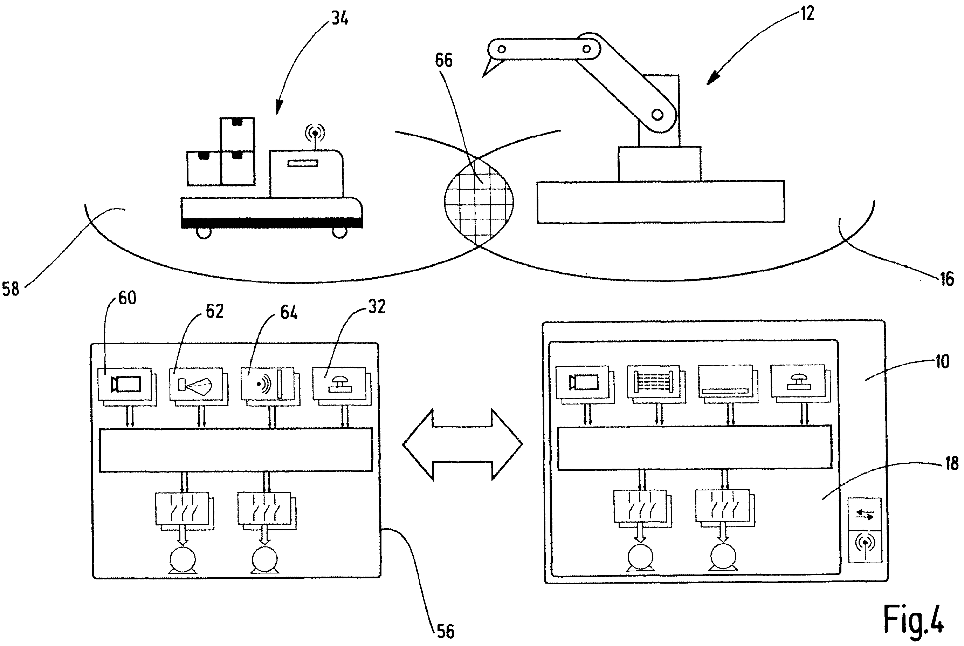

Fig. 4 zeigt ein besonders bevorzugtes Ausführungsbeispiel des neuen Sicherheitssystems. Gleiche Bezugszeichen bezeichnen auch hier wieder gleiche Teile.

Das Sicherheitssystem 10 weist eine erste sicherheitsbezogene Einrichtung 18 auf, mittels derer in zuvor beschriebener Weise ein erster Gefahrenbereich 16 einer technischen Anlage 12 überwacht werden kann. Darüber hinaus ist das Sicherheitssystem 10 dazu ausgebildet, mit einer autonom arbeitenden, technischen Einheit 34 zu kooperieren. Insbesondere ist das Sicherheitssystem 10 dazu ausgebildet, mit einer weiteren sicherheitsbezogenen Einrichtung 56 der autonom arbeitenden, technischen Einheit 34 zu kooperieren.

Die autonom arbeitende, technische Einheit 34 weist somit in diesem Ausführungsbeispiel selbst eine sicherheitsbezogene Einrichtung 56 auf, mit der ein eigener Gefahrenbereich 58 um die autonom arbeitende, technische Einheit 34 herum abgesichert werden kann.

Die zweite sicherheitsbezogene Einrichtung 56 der autonom arbeitenden, technischen Einheit 34 ist folglich in ähnlicher Weise ausgestattet wie die erste sicherheitsbezogene Einrichtung 18 der technischen Anlage 12. Die zweite sicherheitsbezogene Einrichtung 56 weist Sensoren auf, die einzeln oder in Kombination über eine entsprechende Steuerung mit Ausgängen verknüpft sind, um in einer Gefahrensituation die autonom arbeitende, technische Einheit 34 in einen gefahrlosen Zustand zu überführen.

Wie die erste sicherheitsbezogene Einrichtung 18 ist auch die zweite sicherheitsbezogene Einrichtung 56 mehrkanalig redundant aufgebaut. Für das Beispiel fahrerloser Transportfahrzeuge umfasst die zweite sicherheitsbezogene Einrichtung 56 beispielsweise Personenerkennungssysteme, spezielle Bremssysteme, Warneinrichtungen und/oder Not-Aus-Einrichtungen. Als Sensoren bzw. Meldegeräte können so beispielsweise sichere Kamerasysteme 60, Laserscanner 62, Radarabstandssensoren 64 oder Not-Aus-Schalter 32 verwendet werden.

Die zweite sicherheitsbezogene Einrichtung 56 sichert den Gefahrenbereich 58 ab, indem das Transportfahrzeug 36 unverzüglich und sicher zum Stillstand gebracht wird, wenn sich eine Person im Gefahrenbereich 58 aufhält oder ein Not-Aus-Schalter 34 an der Einheit 34 betätigt wird. Die zweite sicherheitsbezogene Einrichtung 58 wirkt dabei unabhängig von der jeweiligen Fahrzeugsteuerung direkt auf ein Not-Aus-Modul und ermöglicht somit ein sicheres Abschalten auch dann, wenn die Fahrzeugsteuerung versagt. Darüber hinaus ist die zweite sicherheitsbezogene Einrichtung 56 unabhängig von der ersten sicherheitsbezogenen Einrichtung 18 ausgebildet. D.h. die erste sicherheitsbezogene Einrichtung 18 und die zweite sicherheitsbezogene Einrichtung 56 überwachen ihren jeweiligen Gefahrenbereich 16, 58 unabhängig voneinander.

Das bevorzugte Sicherheitssystem 10 gemäß dem Ausführungsbeispiel der Fig. 4 ist dazu ausgebildet, die voneinander unabhängig ausgebildeten, sicherheitsbezogenen Einrichtungen der technischen Anlage 12 und der autonom arbeitenden, technischen Einheit 34 zu koordinieren. Mit anderen Worten, das Sicherheitssystem 10 gemäß dem vorliegenden Ausführungsbeispiel ist dazu ausgebildet, mit einer weiteren sicherheitsbezogenen Einrichtung dynamisch zu kooperieren. Dazu kann sich eine autonom arbeitende, technische Einheit 34, wie zuvor beschrieben, bei dem Sicherheitssystem 10 anmelden und registrieren, so dass Teile oder die gesamte sicherheitsbezogene Einrichtung 18 der technischen Anlage 12 deaktiviert werden und die autonom arbeitende, technische Einheit 34 im Gefahrenbereich 16 der technischen Anlage 12 frei agieren kann.

Da abgesehen von etwaigen Endabsicherungssystemen die Sicherheit im Gefahrenbereich 16 durch diese Maßnahme eingeschränkt wird, ist das Sicherheitssystem 10 gemäß dem Ausführungsbeispiel der Fig. 4 bevorzugt dazu eingerichtet, während der Beschränkung auf die Sensoren 60, 62, 64, 32 der zweiten sicherheitsbezogenen Einrichtung 56 der autonom arbeitenden, technischen Einheit 34 zurückzugreifen. Durch diese Maßnahme kann trotz der Beschränkung der ersten sicherheitsbezogenen Einrichtung 18 eine ausreichende Sicherheit im Gefahrenbereich 16 gewährleistet werden.

Unter Umständen kann die Sicherheit im Gefahrenbereich 16 sogar weiter erhöht werden, da zusätzliche Sensoren in das Gesamtsystem eingebracht werden. So können auch Meldegeräte, wie beispielsweise Not-Aus-Taster 32, der autonom arbeitenden Einheit 34 durch das Sicherheitssystem 10 verwendet werden, wobei das Betätigen des Not-Aus-Tasters 32 auf die erste sicherheitsbezogene Einrichtung 18 der technischen Anlage 12 wirkt. D.h. während die zweite sicherheitsbezogene Einrichtung 56 mit der ersten sicherheitsbezogenen Einrichtung 18 kooperiert ,kann ein Betätigen des Not-Aus-Tasters 32 an der autonom arbeitenden Einheit 34 auch zum Abschalten der technischen Anlage 12 führen.

In einem bevorzugten Ausführungsbeispiel kann das Sicherheitssystem 10 zudem so eingerichtet sein, dass eine Beschränkung der ersten sicherheitsbezogenen Einrichtung 18 nur in einem Überlappungsbereich 66 der beiden sich überschneidenden Gefahrenbereiche 16, 58 erfolgt und im Übrigen die Überwachung aufrechterhalten wird.

Das Sicherheitssystem 10 kann darüber hinaus auch selbst sichere Ausgänge (hier nicht dargestellt) unabhängig von der ersten sicherheitsbezogenen Einrichtung 18 aufweisen, mit denen die technische Anlage 12 in einen sicheren Zustand versetzt werden kann. Alternativ kann das Sicherheitssystem 10 jedoch auch auf die erste sicherheitsbezogene Einrichtung 18 und die vorhandenen Mittel zum Überführen der technischen Anlage 12 in den gefahrlosen Zustand zurückgreifen. Letzteres ermöglicht es, dass das neue Sicherheitssystem vorteilhaft als verteilte Funktion innerhalb der ersten sicherheitsbezogenen Einrichtung 18 realisiert werden kann.

Durch die Koordination der zwei unabhängigen sicherheitsbezogenen Einrichtungen 18, 56, die üblicherweise bei den entsprechenden Systemen vorhanden sein müssen, kann auf günstige Weise eine flexible und sichere Absicherung des gesamt Systems erfolgen und entstehende Synergieeffekte können vorteilhaft ausgenutzt werden.

Während in den vorstehenden Ausführungsbeispielen auf die Kooperation einer autonom arbeitenden, technischen Einheit mit einer technischen Anlage abgestellt worden ist, ist es ebenfalls denkbar, dass sich eine Person durch geeignete Mittel als autonom arbeitende Einheit beim Sicherheitssystem anmeldet, beispielsweise durch eine RFID-Karte. Auf diese Weise kann ein automatisierter, koordinierter Betrieb auch mit dem Bediener einer Anlage ermöglicht werden.

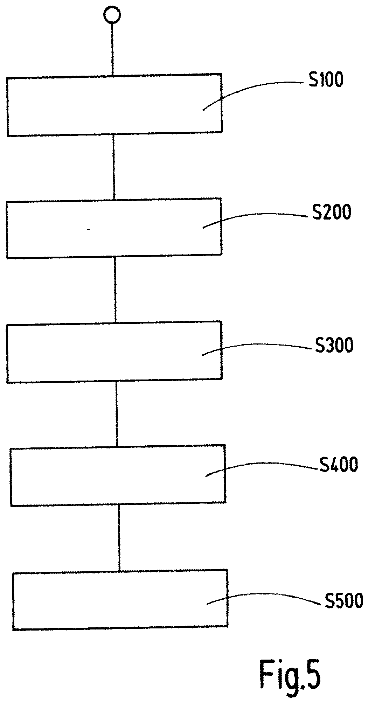

Fig. 5 zeigt in einem Flussdiagramm ein Ausführungsbeispiel des neuen Verfahrens zur Absicherung eines kooperativen Betriebs von Menschen, Robotern und Maschinen an einer technischen Anlage.

Ausgangspunkt des Verfahrens ist das Bereitstellen einer ersten sicherheitsbezogenen Einrichtung zur Überwachung eines ersten Gefahrenbereichs der technischen Anlage.

Im Schritt S100 wird der Gefahrenbereich überwacht und das Auftreten einer Gefahrensituation erkannt. Die Überwachung erfolgt in an sich bekannter Weise durch die erste sicherheitsbezogene Einrichtung. Eine sicherheitsbezogene Einrichtung kann verschiedene Sensoren umfassen wie beispielsweise: ein dreidimensionales sicheres Kamerasystem, Nahbereichssensoren (basierend auf optischen Prinzipien oder Radartechnologie), Trittmatten (mit und ohne sichere Ortsauflösung), Laserscanner (einzeln und im Cluster), Infrarotüberwachung, Lichtschranken, Funkortung oder andere berührungslos wirkende Schutzeinrichtungen. Es versteht sich, dass auch eine Kombination der vorstehend genannten Einrichtung möglich ist bzw. eine Sensordatenfusion stattfindet, bei der die Daten der einzelnen Sensoren miteinander verknüpft und synthetisiert werden.

Vorzugsweise wirken die Sensoren unabhängig von einer Steuerung der technischen Anlage auf ein Sicherheitsmodul, welches dazu ausgebildet ist, im Falle einer Gefahrensituation die technische Anlage in einen gefahrlosen Zustand zu überführen, insbesondere abzuschalten, wie es hier im Schritt S200 angedeutet ist.

Schritt S300 umfasst das Identifizieren einer autonom arbeitenden, technischen Einheit im Umfeld der technischen Anlage. Identifizieren heißt in diesem Zusammenhang eine autonom arbeitende, technische Einheit in einem definierten Bereich zu erfassen und einer definierten Gruppe zuzuordnen. Kann eine Zuordnung zu einer definierten Gruppe nicht erfolgen, wird die erfasste Einheit als nicht-identifizierte Einheit behandelt und von der ersten sicherheitsbezogenen Einrichtung wie jedes andere Objekt im ersten Gefahrenbereich der technischen Anlage behandelt. Eine definierte Gruppe kann eine Liste individueller Einheiten sein oder aber eine typenbezogene Zuordnung umfassen. Mit anderen Worten autonom arbeitende, technische Einheiten können in einem Ausführungsbeispiel individuell erfasst werden oder in einem weiteren Ausführungsbeispiel anhand ihres Typs.

Nach der Identifizierung folgt im Schritt S400 die Registrierung der autonom arbeitenden, technischen Einheit, wenn diese eine definierte Bedingung erfüllt. Die Registrierung umfasst somit vorzugsweise einen Authentisierungsprozess, wobei sich die autonom arbeitende, technische Einheit beim Sicherheitssystem anmeldet, beispielsweise indem eine Kennung der autonom arbeitenden, technischen Einheit verarbeitet wird, um zu überprüfen, ob die Einheit berechtigt ist, sich im Gefahrenbereich der technischen Anlage aufzuhalten. Die definierte Bedingung ist beispielsweise erfüllt, wenn die Kennung der autonom arbeitenden, technischen Einheit in einer Liste hinterlegt ist oder eine definierte Anmeldeprozedur erfolgreich durchgeführt worden ist.

Im Schritt S500 erfolgt eine Beschränkung der Überwachung des ersten Gefahrenbereichs durch die erste sicherheitsbezogene Einrichtung als Reaktion auf die Registrierung der autonom arbeitenden, technischen Einheit. Mit anderen Worten, wenn eine autonom arbeitende, technische Einheit identifiziert worden ist und sich erfolgreich bei dem Sicherheitssystem registrieren konnte, schränkt dieses die Überwachung des ersten Gefahrenbereichs auf geeignete Weise ein, so dass die autonom arbeitende, technische Einheit im ersten Gefahrenbereich agieren kann. Insbesondere wird verhindert, dass durch die im ersten Gefahrenbereich autonom agierende Einheit die Sicherheitsfunktion der technischen Anlage ausgelöst wird und die technische Anlage in einen gefahrlosen Zustand überführt wird.

Die Beschränkung beinhaltet insbesondere ein sog. Muting, bei dem Sensoren gezielt deaktiviert werden, so dass von diesen keine Reaktion ausgelöst wird. Im Falle eines dreidimensionalen sicheren Kamerasystems kann dies beispielsweise bedeuten, dass einige Schutzbereiche, die von dem System überwacht werden, während der Beschränkung nicht mehr überwacht werden. Andere Schutzbereiche hingegen führen weiterhin zum Auslösen der Sicherheitsfunktion, wenn in diesen Bereichen ein nicht berechtigtes Objekt erkannt wird.

Eine Beschränkung der Überwachung ist somit vorzugsweise ein partielles Deaktivieren der Schutzfunktion für definierte Bereiche aus dem gesamten Schutzbereich, den die Sensorik der ersten sicherheitsbezogenen Einrichtung abdeckt. In besonders bevorzugten Ausführungsbeispielen wird die Beschränkung der Überwachung durch die erste sicherheitsbezogene Einrichtung durch eine zusätzliche Überwachung durch eine zweite sicherheitsbezogene Einrichtung der autonom arbeitenden, technischen Einheit kompensiert. Auf diese Weise wird eine flexible Kooperation möglich, während gleichzeitig ein hohes Sicherheitsniveau gewahrt werden kann.

Es versteht sich, dass das erfindungsgemäße Verfahren nicht auf die vorstehend genannten Schritte sowie die aufgeführte Reihenfolge beschränkt ist. In anderen Ausführungsbeispielen können die einzelnen Verfahrensschritte komplexer ausgestaltet sein, zusätzliche Schritte umfassen oder in einer anderen Reihenfolge ausgeführt werden.

## Patentansprüche

1. Sicherheitssystem (10) zur Absicherung eines kooperativen Betriebs von Menschen, Robotern und Maschinen an einer technischen Anlage (12), mit einer ersten sicherheitsbezogenen Einrichtung (18), die dazu ausgebildet ist, einen ersten Gefahrenbereich (16) der technischen Anlage (12) zu überwachen und die technische Anlage (12) in einen gefahrlosen Zustand zu überführen, wenn eine Gefahrensituation erkannt wird,
wobei das Sicherheitssystem (10) dazu ausgebildet ist, eine autonom arbeitende, technische Einheit (34) zu identifizieren und die autonom arbeitende, technische Einheit (34) zu registrieren, wenn diese eine definierte Bedingung erfüllt, sowie die Überwachung des ersten Gefahrenbereichs (16) durch die erste sicherheitsbezogene Einrichtung (18) als Reaktion auf die Registrierung zu beschränken, wobei das Beschränken der Überwachung ein Aktivieren einer anderen Sicherheitseinrichtung umfasst, die eine Endabsicherung während der beschränkten Überwachung ermöglicht,
**dadurch gekennzeichnet, dass** die technische Anlage (12) für die Endabsicherung über weitere Sensoren verfügt, die während der Beschränkung nicht deaktiviert werden bzw. erst während der Beschränkung aktiviert werden, wobei es sich bei solchen Sensoren um taktile Sensoren bzw. kapazitive Nahfeldsensoren handelt, die unmittelbar auf der Oberfläche der technischen Anlage (12) angeordnet sind und eine direkte Berührung bzw. eine unmittelbar bevorstehende Berührung detektieren.

2. Sicherheitssystem nach Anspruch 1, wobei die erste sicherheitsbezogene Einrichtung (18) eine Sensorik (20) zur Detektion von Personen in dem ersten Gefahrenbereich (16) umfasst und das Sicherheitssystem dazu ausgebildet ist, anhand der Sensorik (20) die autonom arbeitende, technische Einheit (34) zu identifizieren, und insbesondere der autonom arbeitenden, technischen Einheit (34) mit der Identifikation eine Kennung zuzuordnen.

3. Sicherheitssystem nach Anspruch 1 oder 2, wobei die autonom arbeitende, technische Einheit (34) ein Fahrzeug (36) eines fahrerlosen Transportsystems, FTS, ist.

4. Sicherheitssystem nach einem der Ansprüche 1 bis 3, wobei die autonom arbeitende, technische Einheit (34) ein Mensch ist, der sich über technische Mittel, als autonom arbeitende, technische Einheit identifizieren kann.

5. Sicherheitssystem nach einem der Ansprüche 1 bis 4, wobei die erste sicherheitsbezogene Einrichtung (18) mindestens einen Sensor (28;30;32), ein Schaltgerät und einen Aktor umfasst, die eine mehrkanalige, insbesondere eine diversitäre Struktur bilden, und/oder wobei das Sicherheitssystem als logische Funktion innerhalb einer sicheren Steuerung oder als verteilte Funktion der ersten sicherheitsbezogenen Einrichtung (18) eingerichtet ist.

6. Verfahren zur Absicherung eines kooperativen Betriebs von Menschen, Robotern und Maschinen an einer technischen Anlage (12), mit den Schritten:
- Bereitstellen einer ersten sicherheitsbezogenen Einrichtung (18) zur Überwachung eines Gefahrenbereichs (16) der technischen Anlage (12);
- Überwachen des ersten Gefahrenbereichs (16) auf eine Gefahrensituation;
- Überführen der technischen Anlage (12) in einen gefahrlosen Zustand, wenn die Gefahrensituation erkannt wurde;
- Identifizieren einer autonom arbeitenden, technischen Einheit (34);
- Registrieren der autonom arbeitenden, technischen Einheit (34), wenn die autonom arbeitende, technische Einheit (34) eine definierte Bedingung erfüllt; und
- Beschränken der Überwachung des ersten Gefahrenbereichs (16) durch die erste sicherheitsbezogene Einrichtung (18) als Reaktion auf die Registrierung der autonom arbeitenden, technischen Einheit (34), wobei das Beschränken der Überwachung ein Aktivieren einer anderen Sicherheitseinrichtung umfasst, die eine Endabsicherung während der beschränkten Überwachung ermöglicht,
**dadurch gekennzeichnet, dass** die technische Anlage (12) für die Endabsicherung über weitere Sensoren verfügt, die während der Beschränkung nicht deaktiviert werden bzw. erst während der Beschränkung aktiviert werden, wobei es sich bei solchen Sensoren um taktile Sensoren bzw. kapazitive Nahfeldsensoren handelt, die unmittelbar auf der Oberfläche der technischen Anlage (12) angeordnet sind und eine direkte Berührung bzw. eine unmittelbar bevorstehende Berührung detektieren.

7. Computerprogramm, umfassend Befehle, die bewirken, dass ein Sicherheitssystem des Anspruchs 1 die Verfahrensschritte nach Anspruch 6 ausführt.

## Claims

1. A safety system (10) for safeguarding cooperative operation of people, robots and machines with respect to a technical installation (12), comprising a first safety-related device (18) which is configured to monitor a first hazardous area (16) of the technical installation (12) and to bring the technical installation (12) into a safe state if a hazardous condition is detected,
wherein the safety system (10) is configured to identify an autonomously operating technical unit (34) and to register the autonomously operating technical unit (34) when it satisfies a defined condition, and to restrict monitoring of the first hazardous area (16) by the first safety-related device (18) in response to the registration, wherein the restricting of the monitoring includes activating another safety device that allows end protection during the restricted monitoring,
**characterized in that** the technical installation (12) for the end protection has further sensors which are not deactivated during the restricted monitoring or are only activated during the restricted monitoring, such sensors being tactile sensors or capacitive near-field sensors which are arranged directly on the surface of the technical installation (12) and detect a direct contact or an imminent contact.

2. Safety system according to claim 1, wherein the first safety-related device (18) comprises a sensor means (20) for detecting persons in the first hazardous area (16) and the safety system is configured to identify the autonomously operating technical unit (34) by means of the sensor means (20), in particular wherein the safety system is configured to assign with the identification an identifier to the autonomously operating technical unit (34).

3. Safety system according to claim 1 or 2, wherein the autonomously operating technical unit (34) is a vehicle (36) of an automated guided vehicle system, AGV.

4. Safety system according to any one of claims 1 to 3, wherein the autonomously operating technical unit (34) is a person who can identify himself as an autonomously operating technical unit by technical means.

5. Safety system according to any one of claims 1 to 4, wherein the first safety-related device (18) comprises at least one sensor (28; 30; 32), a switching device and an actuator which form a multi-channel, in particular a diverse structure, and/or wherein the safety system is designed as a logical function within a safety controller or as a distributed function of the first safety-related device (18).

6. Method for safeguarding cooperative operation of people, robots and machines with respect to a technical installation (12), comprising the steps of:
- Providing a first safety-related device (18) for monitoring a hazardous area (16) of the technical installation (12);
- Monitoring the first hazardous area (16) for a hazardous condition;
- Bringing the technical installation (12) into a safe state when the hazardous condition has been detected;
- Identifying an autonomously operating technical unit (34);
- Registering the autonomously operating technical unit (34) when the autonomously operating technical unit (34) satisfies a defined condition; and
- Restricting monitoring of the first hazardous area (16) by the first safety-related device (18) in response to registration of the autonomous technical unit (34), wherein the restricting of the monitoring includes activating another safety device that allows end protection during the restricted monitoring;
**characterized in that**
the technical installation (12) for the end protection has further sensors which are not deactivated during the restricted monitoring or are only activated during the restricted monitoring, such sensors being tactile sensors or capacitive near-field sensors which are arranged directly on the surface of the technical installation (12) and detect a direct contact or an imminent contact.

7. A computer program comprising commands which cause a safety system according to claim 1 to execute the method steps according to claim 6.

## Revendications

1. Système de sécurité (10) destiné à assurer le fonctionnement coopératif de personnes, de robots et de machines sur une installation technique (12), ledit système de sécurité comprenant un premier module de sécurité (18) qui est conçu pour surveiller une première zone dangereuse (16) de l'installation technique (12) et pour transférer l'installation technique (12) dans un état sans danger lorsqu'une situation dangereuse est détectée,
le système de sécurité (10) étant conçu pour identifier une unité technique (34) fonctionnant de manière autonome et pour enregistrer l'unité technique (34) fonctionnant de manière autonome si elle remplit une condition définie, et limiter la surveillance de la première zone dangereuse (16) par le premier module de sécurité (18) en réponse à l'enregistrement, la limitation de la surveillance comprenant l'activation d'un autre module de sécurité qui permet une protection finale pendant la surveillance limitée,
**caractérisé en ce que** l'installation technique (12) dispose, pour la protection finale, de capteurs supplémentaires qui ne sont pas désactivés pendant la limitation ou qui ne sont activés que pendant la limitation, de tels capteurs étant des capteurs tactiles ou des capteurs de champ proche capacitifs qui sont disposés directement sur la surface de l'installation technique (12) et qui détectent un contact direct ou imminent.

2. Système de sécurité selon la revendication 1, le premier module de sécurité (18) comprenant un ensemble de détection (20) destiné à détecter des personnes dans la première zone dangereuse (16) et le système de sécurité étant conçu pour identifier l'unité technique (34) fonctionnant de manière autonome sur la base de l'ensemble de détection (20), et en particulier pour associer un identifiant à l'unité technique (34) fonctionnant de manière autonome avec l'identification.

3. Système de sécurité selon la revendication 1 ou 2, l'unité technique (34) fonctionnant de manière autonome étant un véhicule (36) d'un système de transport sans conducteur FTS.

4. Système de sécurité selon l'une des revendications 1 à 3, l'unité technique (34) fonctionnant de manière autonome étant une personne qui peut s'identifier comme unité technique fonctionnant de manière autonome par le biais de moyens techniques.

5. Système de sécurité selon l'une des revendications 1 à 4, le premier module de sécurité (18) comprenant au moins un capteur (28 ; 30 ; 32), un appareil de commutation et un actionneur qui forment une structure multicanal, en particulier une structure diversifiée, et/ou le système de sécurité étant conçu comme une fonction logique à l'intérieur d'une commande sécurisée ou comme une fonction distribuée du premier module de sécurité (18).

6. Procédé permettant d'assurer un fonctionnement coopératif de personnes, de robots et de machines sur une installation technique (12), ledit procédé comprenant les étapes suivantes :
- fournir un premier module de sécurité (18) destiné à surveiller une zone dangereuse (16) de l'installation technique (12) ;
- surveiller la première zone dangereuse (16) pour détecter une situation dangereuse ;
- transférer l'installation technique (12) vers un état sans danger lorsque la situation dangereuse a été détectée ;
- identifier une unité technique (34) fonctionnant de manière autonome ;
- enregistrer l'unité technique (34) fonctionnant de manière autonome lorsque l'unité technique (34) fonctionnant de manière autonome remplit une condition définie ; et
- limiter la surveillance de la première zone dangereuse (16) par le premier module de sécurité (18) en réponse à l'enregistrement de l'unité technique (34) fonctionnant de manière autonome, la limitation de la surveillance comprenant l'activation d'un autre module de sécurité qui permet une protection finale pendant la surveillance limitée,
**caractérisé en ce que** l'installation technique (12) dispose, pour la protection finale, de capteurs supplémentaires qui ne sont pas désactivés pendant la limitation ou qui ne sont activés que pendant la limitation, de tels capteurs étant des capteurs tactiles ou des capteurs de champ proche capacitifs qui sont disposés directement sur la surface de l'installation technique (12) et qui détectent un contact direct ou imminent.

7. Logiciel comprenant des instructions qui amènent un système de sécurité selon la revendication 1 à exécuter les étapes de procédé selon la revendication 6.
